# EUROPEAN PATENT SPECIFICATION

(11) **EP 4 184 156 B1**
(45) Date of publication and mention of the grant of the patent: **18.11.2026**
(21) Application number: 21842112.1
(22) Date of filing: 11.03.2021
(51) Int. Cl.: G01N 27/333

(54) **METHOD FOR MANUFACTURING ION SENSOR**
VERFAHREN ZUR HERSTELLUNG EINES IONENSENSORS
PROCÉDÉ DESTINÉ À FABRIQUER UN CAPTEUR D'IONS

(30) Priority: 16.07.2020 JP 2020121933
(43) Date of publication of application: 24.05.2023
(73) Proprietor: HITACHI HIGH-TECH CORPORATION, Tokyo 105-6409 (JP)
(72) Inventor: TAKEUCHI Takanori, Tokyo 105-6409 (JP)
(74) Representative: MERH-IP Matias Erny Reichl Hoffmann Patentanwälte PartG mbB
(86) International application number: PCT/JP2021/009783
(87) International publication number: WO 2022/014095

(56) References cited:
- JP-A- 2009 066 820
- JP-A- 2018 205 034
- JP-A- 2018 205 034
- JP-A- H 095 293
- JP-A- H09 210 949
- JP-A- H11 132 991
- JP-A- H11 295 261
- JP-A- S 559 138
- JP-A- S59 102 153
- JP-A- S59 102 153
- JP-A- S6 010 163
- JP-U- H0 729 457
- KR-B1- 100 474 880
- US-A- 4 687 500

## Description

### Technical Field

The present invention relates to a method for manufacturing an ion sensor and an electrode member for an ion sensor.

### Background Art

An ion sensor is used together with a reference electrode to measure a concentration of an ionic electrolyte in a sample, and is used by being mounted on an analysis device such as a clinical analysis device, a water quality analysis device, a soil analysis device, or a food analysis device.

As an ion-sensitive film formed on a sensitive surface of the ion sensor, a film is known in the related art, which is obtained by, with a hydrophobic organic polymer such as polyvinyl chloride serving as a base, appropriately adding a plasticizer such as dibutyl phthalate (DBP), dipropyl phthalate (DPP), or 2-nitrophenyl octyl ether (NPOE) to the base, and mixing the base with an ion-sensitive substance such as valinomycin or a macrocyclic polyether derivative.

The ion-sensitive film is prepared by applying a solvent solution, in which the organic polymer serving as the base of the ion-sensitive film and the ion-sensitive substance are dissolved in a volatile solvent at a predetermined ratio, to the sensitive surface of the ion sensor by brush application, dipping, dropwise adding, or the like so as to form an application film of the solution first, and then causing evaporation of the solvent to proceed while applying a stress in a direction of the sensitive surface. In this manner, when the solvent is evaporated while applying the stress as compared with a case of simple application and drying, an ion-sensitive film having a fairly smooth surface can be obtained, and an ion sensor in which an adverse effect due to adhesion of protein or the like is significantly prevented can be obtained.

The ion sensor generally (for example, PTL 1) includes an electrode body, an internal solution, an ion-sensitive film, and an internal electrode. Here, the electrode body of a flow-type ion sensor includes a specimen flow path, and a through hole is provided in a part of a side surface of the specimen flow path. Then, the through hole is covered with the ion-sensitive film so as to form a response surface, and the ion-sensitive film and the electrode body are bonded to each other at a portion other than the response surface.

PTL 2 discloses a manufacturing method for an ion selective electrode, in which a pressure contact rod is vertically fixed at the center of a base plate, a spring is wound round the rod and then an outer tube is loosely fitted to the rod. A sensitive film is placed on the upper end face of the outer tube, and a body is turned upside down and then loosely fitted to the outer tube.

PTL 3 discloses a body of an ion-sensitive electrode which is formed from a bulb of an ion-selective material that is transparent to infrared radiation.

PTL 4 discloses a laser welding method for the plastic members interposed with water which comprises a preparation, a contact surface step, and a fusing step of irradiating at least one of the members with laser beams to cause heat generation to fuse the members to each other.

### Citation List

### Patent Literature

PTL 1: JPH11-132991A
PTL 2: JP S59 102153 A
PTL 3: US4687500A
PTL 4: JP2009066820A

### Summary of Invention

### Technical Problem

A bonding operation of the ion-sensitive film and the electrode body is performed by dissolving the organic polymer that constitutes the ion-sensitive film and the electrode body once using a volatile solvent such as tetrahydrofuran (THF) at a bonding interface of the ion-sensitive film and the electrode body, and then evaporating the volatile solvent.

Here, as a result of investigating a shape of the electrode body and a shape of the ion-sensitive film of the ion sensor and performance of the ion sensor, the inventors have noticed the following problems. That is, there are problems in that a bonding strength between the electrode body and the ion-sensitive film is weak and a response surface is easily peeled off due to a material variation in the electrode body and the ion-sensitive film, and a performance failure easily occurs when the response surface is peeled off.

An object of the invention is to provide a method for manufacturing an ion sensor and an electrode member for an ion sensor, in which a bonding strength between the electrode body and an ion-sensitive film is improved regardless of a material variation so as to reduce occurrence of a performance failure. Solution to Problem

The above cited problems are solved in accordance with the appended set of claims. In particular, it is described herein a method for manufacturing an ion sensor in which an ion-sensitive film is bonded to an electrode member accommodating an internal solution and including an internal electrode. The method for manufacturing an ion sensor includes: an application step of applying water to a placement surface of an electrode body, in the electrode member, on which the ion-sensitive film is to be placed; a placement step of placing the ion-sensitive film in a state in which water is present on the placement surface; a pressurization step of pressurizing the ion-sensitive film from a side opposite to the electrode body; and an irradiation step of irradiating the ion-sensitive film with a laser beam from the side opposite to the electrode body in a state in which the ion-sensitive film is pressed against the electrode body, wherein a weight that transmits the laser beam is used in the pressurization step.

### Advantageous Effects of Invention

According to the invention, it is possible to provide a method for manufacturing an ion sensor in which a bonding strength between the electrode body and an ion-sensitive film is improved regardless of a material variation so as to reduce occurrence of a performance failure.

### Brief Description of Drawings

[FIG. 1] FIG. 1 is an overall view showing a method for manufacturing an ion sensor according to an embodiment of the invention.
[FIG. 2] FIG. 2 is a flowchart showing the method for manufacturing an ion sensor according to the embodiment of the invention.
[FIG. 3] FIG. 3 is a view showing an application step in step S1 of FIG. 2.
[FIG. 4] FIG. 4 is a view showing a placement step in step S2 of FIG. 2.
[FIG. 5] FIG. 5 is a view showing a pressurization step in step S3 of FIG. 2.
[FIG. 6] FIG. 6 is a view showing an irradiation step in step S4 of FIG. 2.
[FIG. 7] FIG. 7 is a view showing an assembling step in step S5 of FIG. 2.
[FIG. 8] (a) of FIG. 8 and (b) of FIG. 8 are views showing states of a surface facing an electrode body and an ion-sensitive film, in which (a) of FIG. 8 shows a case in which water 2 is not used as in a comparative example, and (b) of FIG. 8 shows a case in which water 2 is used as in the present embodiment.

### Description of Embodiments

Hereinafter, an embodiment of the invention will be described in detail with reference to the drawings.

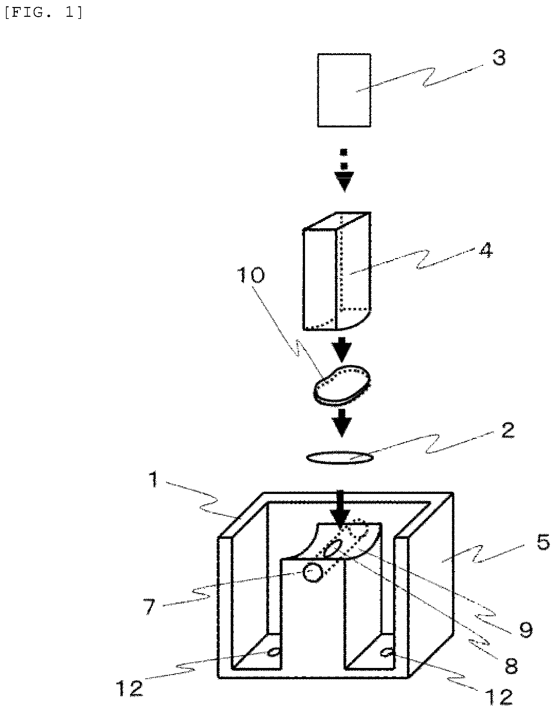

FIG. 1 is an overall view showing an outline of a method for manufacturing an ion sensor 1 according to the present embodiment. In the method for manufacturing the ion sensor 1 according to the present embodiment, water 2, a laser irradiator 3, and a weight 4 are used. In an electrode body 5, although a wall surface on a front side, which facilitates understanding of the present embodiment, is not shown, the wall surface similar to a wall surface on a back side is actually provided.

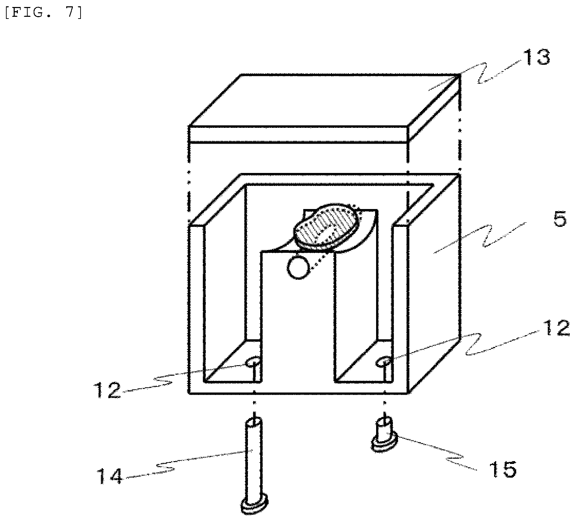

First, a configuration of an electrode member used in the ion sensor 1 will be described with reference to FIG. 7. The electrode member for an ion sensor includes an internal electrode 14 that outputs potential generated in an ion-sensitive film, an electrode body 5 accommodating an internal solution (not shown) that electrically conducts the internal electrode 14 and the ion-sensitive film 10, an electrode body pin 15 that seals the internal solution so as not to leak the internal solution, and an electrode body plate 13 that serves as a bottom surface accommodating an internal container.

Here, the electrode body 5 includes a specimen flow path 7 which is formed inside the electrode body 5 and through which a liquid containing a specimen to be measured flows, and a placement surface 9 (bonding surface) on which the ion-sensitive film 10 is to be placed. The electrode body 5 has a rectangular parallelepiped shape having an outer dimension of about 11 mm × 20 mm × 24 mm, the specimen flow path 7 has a diameter of about 1 mm, and the placement surface 9 has a size of about 5 mm × 5 mm. In addition, a part of the specimen flow path 7 is formed with a through portion 8, which has an oval shape of about 0.9 mm × 3 mm and is exposed to the placement surface 9 to bring the specimen into contact with the ion-sensitive film 10. Regarding a material of the electrode body 5, it is considered to use a thermoplastic resin or a hard resin containing a pigment for the entire electrode body 5. Alternatively, the pigment may be applied to the placement surface 9 of the electrode body 5 separately from a main body of the electrode body formed of the hard resin. In this manner, as a material that easily generates thermal energy, a material having a melting point lower than that of the ion-sensitive film is preferably used for at least the placement surface 9 of the electrode body 5.

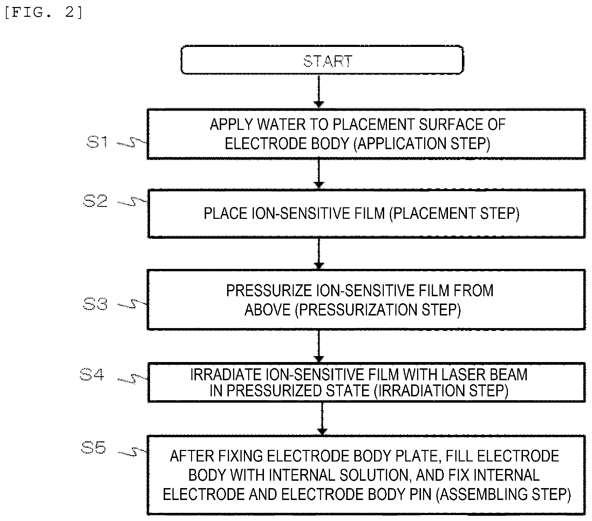

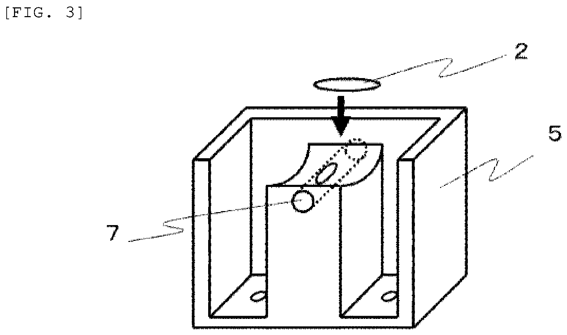

Next, a method for manufacturing the ion sensor 1 will be described in detail with reference to FIGS. 2 to 7. FIG. 2 is a flowchart showing the method for manufacturing an ion sensor, and FIGS. 3 to 7 are views showing steps in the method for manufacturing an ion sensor.

First, the water 2 is applied to the placement surface 9 of the electrode body 5 (step S1). FIG. 3 is a view showing the application step in step S1. Since the water applied to the placement surface 9 is held on a surface of the placement surface 9 by surface tension, the water does not flow down from the through portion 8 to the specimen flow path.

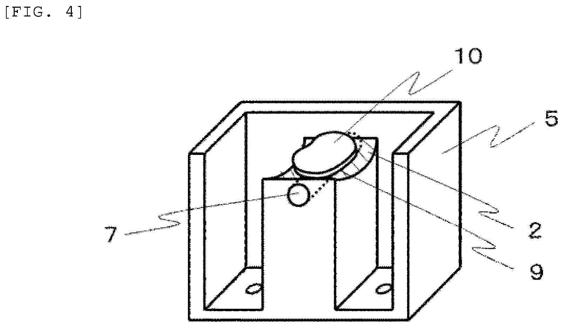

Next, the ion-sensitive film 10 is placed onto the placement surface 9 of the electrode body 5 from above in a state in which the water 2 is present in the placement surface 9 other than the through portion 8 (before the water 2 is evaporated and disappears) (step S2). FIG. 4 is a view showing the placement step in step S2. Here, the ion-sensitive film 10 is formed of a soft or hard resin material having a diameter of 5 mm and a thickness of about 0.1 mm to 0.5 mm. The ion-sensitive film 10 transmits a wavelength in a far-infrared region and has a melting point higher than that of the electrode body 5 on the placement surface 9.

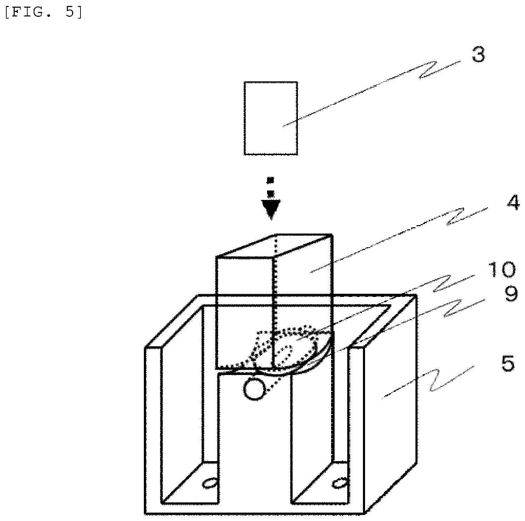

Thereafter, the ion-sensitive film 10 is pressurized from a side opposite to the electrode body 5 (step S3). FIG. 5 is a view showing the pressurization step in step S3. In the pressurization step, the weight 4 is used, and the ion-sensitive film 10 is pressed, by the weight 4, against the placement surface 9 of the electrode body 5 in a vertical direction with the water 2 interposed between the ion-sensitive film 10 and the placement surface 9. A force applied to the entire ion-sensitive film 10 by the weight 4 is about 10 N to 100 N, so that adhesion between the ion-sensitive film 10, the water 2, and the electrode body 5 is improved. Here, in addition to transparent glass such as quartz glass, ceramic and the like are also considered to be a material of the weight 4 as long as a wavelength in the far-infrared region is allowed to transmit the material, and the material is not limited thereto. In addition, a lower end surface of the weight 4, which is a side in contact with the ion-sensitive film 10, has approximately the same size as that of the placement surface 9 of the electrode body 5 and has a shape similar to that of the placement surface 9. The pressurizing force may be obtained not only by the gravity of the weight 4 itself but also by using an external force provided by, such as a servo motor.

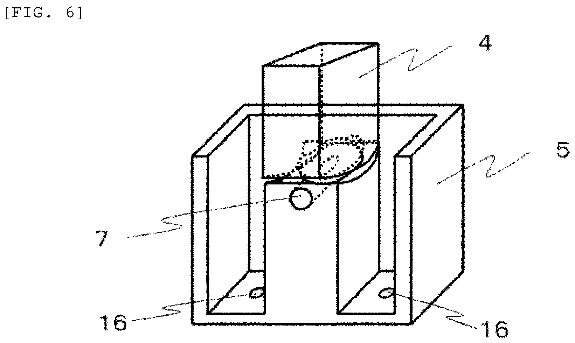

In subsequent steps, the ion-sensitive film 10 is irradiated with a laser beam from above (the side opposite to the electrode body 5) in a state in which the ion-sensitive film 10 is pressed against the placement surface 9 (step S4). FIG. 6 is a view showing the irradiation step in step S4. The laser beam has a wavelength that is in the far-infrared region and is emitted from the laser irradiator 3. When the entire placement surface 9 or the entire weight 4 is irradiated with the laser beam, energy of the laser beam is converted into thermal energy, and the placement surface 9 of the electrode body 5 is melted by heat generation. At this time, since a gap between a surface facing the ion-sensitive film 10 and the electrode body 5 is filled with the water applied in the application step in step S1, the heat generated by the laser beam irradiation spreads over the placement surface 9. An irradiation time of the laser beam is preferably about 1 second to 20 seconds in consideration of a time until which the placement surface 9 of the electrode body 5 is melted and cured. The irradiation step is performed while the pressurization step in step S3 is continued, and the ion-sensitive film 10 is pressed against the placement surface 9 in a melted state, and thus the ion-sensitive film 10 and the placement surface 9 are easily bonded to each other. Further, by performing the pressurization step for about 1 second to 20 seconds as well after the irradiation step is completed, a bonding strength with the ion-sensitive film 10 is also improved for the placement surface 9 near the through portion 8.

When the irradiation step and the pressurization step are completed, a final assembling step of the ion sensor 1 is started (step S5). FIG. 7 is a view showing the assembling step in step S5. In the assembling step, first, the electrode body plate 13 is bonded and fixed to the electrode body 5, and the electrode body 5 is filled with the internal solution from hole portions 12. Further, after the internal electrode 14 is inserted through one hole portion 12 and bonded and fixed to the electrode body 5, the electrode body pin 15 is inserted through the other hole portion 12 and bonded and fixed to the electrode body 5. Thus, the manufacturing of the ion sensor 1 is completed.

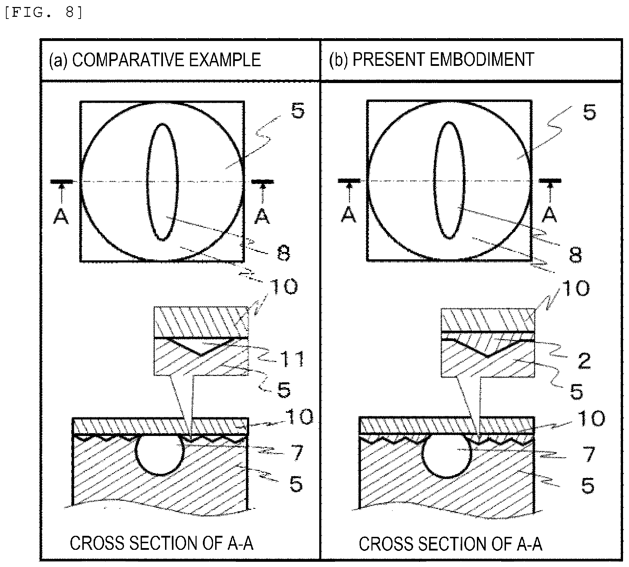

Hereinafter, effects of the water 2 in the method for manufacturing the ion sensor 1 according to the present embodiment will be described. (a) of FIG. 8 and (b) of FIG. 8 are views showing states of the surface facing the electrode body 5 and the ion-sensitive film 10 when the ion-sensitive film 10 is pressurized with the weight 4, in which (a) of FIG. 8 shows a case in which the water 2 is not used as in a comparative example, and (b) of FIG. 8 shows a case in which the water 2 is used as in the present embodiment. Here, a case in which there is a variation in the material of the electrode body 5 and unevenness is generated on the placement surface 9 will be described as an example, but the same applies to a case in which there is a variation in the material of the ion-sensitive film 10.

First, in the case in which the water 2 is not used as in the comparative example, as shown in (a) of FIG. 8, since a gap 11 is present, it is difficult to uniformly transfer the thermal energy toward between the electrode body 5 and the ion-sensitive film 10 even when the laser irradiator 3 emits the laser beam.

On the other hand, in the present embodiment, as shown in (b) of FIG. 8, since the gap between the electrode body 5 and the ion-sensitive film 10 is filled with the water 2, the thermal energy is uniformly transferred when the laser beam is emitted. Here, although the water 2 itself is evaporated by heat, melting on the placement surface 9 of the electrode body 5 is uniformly promoted, and the adhesion between the electrode body 5 and the ion-sensitive film 10 is improved. As a result, according to the present embodiment, even when the electrode body 5 has a material variation, the bonding strength between the electrode body 5 and the ion-sensitive film 10 is increased, and thus it is possible to prevent a performance failure due to peeling of a response surface and to obtain stability of quality and a high yield rate.

The above embodiment is described in detail for better understanding of the invention, and the invention is not necessarily limited to those including all configurations described above. Further, a part of the configuration of the embodiment may be added, deleted, or replaced with another configuration, within the scope of the invention as defined by the appended claims.

### Reference Signs List

1: ion sensor
2: water
3: laser irradiator
4: weight
5: electrode body
7: specimen flow path
8: through portion
9: placement surface
10: ion-sensitive film
11: gap
12: hole portion
13: electrode body plate
14: internal electrode
15: electrode body pin

## Claims

1. A method for manufacturing an ion sensor (1) in which an ion-sensitive film (10) is bonded to an electrode member accommodating an internal solution and including an internal electrode, the method for manufacturing an ion sensor (1) **characterized by** comprising:
an application step of applying water to a placement surface of an electrode body (5), in the electrode member, on which the ion-sensitive film (10) is to be placed;
a placement step of placing the ion-sensitive film (10) in a state in which water is present on the placement surface;
a pressurization step of pressurizing the ion-sensitive film (10) from a side opposite to the electrode body (5); and
an irradiation step of irradiating the ion-sensitive film (10) with a laser beam from the side opposite to the electrode body (5) in a state in which the ion-sensitive film (10) is pressed against the electrode body (5), wherein
a weight that transmits the laser beam is used in the pressurization step.

2. The method for manufacturing an ion sensor according to claim 1, wherein
the irradiation step is performed while the pressurization step is continued.

3. The method for manufacturing an ion sensor according to claim 1, wherein
a melting point of the placement surface of the electrode body is lower than that of the ion-sensitive film (10).

4. The method for manufacturing an ion sensor according to claim 3, wherein
the placement surface of the electrode body (5) is provided with a material different from that of a main body of the electrode body (5).

## Patentansprüche

1. Verfahren zum Herstellen eines Ionensensors (1), in dem ein ionensensitiver Film (10) mit einem Elektrodenelement, das eine Innenlösung aufnimmt und eine Innenelektrode enthält, verbunden wird, wobei das Verfahren zum Herstellen eines Ionensensors (1) **dadurch gekennzeichnet ist, dass** es Folgendes umfasst:
einen Aufbringungsschritt des Aufbringens von Wasser auf eine Anordnungsfläche eines Elektrodenkörpers (5) in dem Elektrodenelement, auf der der ionensensitive Film (10) angeordnet werden soll;
einen Anordnungsschritt des Anordnens des ionensensitiven Films (10) in einem Zustand, in dem Wasser auf der Anordnungsfläche vorhanden ist;
einen Druckbeaufschlagungsschritt des Beaufschlagens des ionensensitiven Films (10) mit Druck von einer Seite, die dem Elektrodenkörper (5) gegenüberliegt; und
einen Bestrahlungsschritt des Bestrahlens des ionensensitiven Films (10) mit einem Laserstrahl von der Seite, die dem Elektrodenkörper (5) gegenüberliegt, in einem Zustand, in dem der ionensensitive Film (10) gegen den Elektrodenkörper (5) gepresst wird, wobei
in dem Druckbeaufschlagungsschritt ein Gewicht verwendet wird, das den Laserstrahl übermittelt.

2. Verfahren zum Herstellen eines Ionensensors nach Anspruch 1, wobei
der Bestrahlungsschritt durchgeführt wird, während der Druckbeaufschlagungsschritt fortgeführt wird.

3. Verfahren zum Herstellen eines Ionensensors nach Anspruch 1, wobei
ein Schmelzpunkt der Anordnungsfläche des Elektrodenkörpers niedriger ist als der des ionensensitiven Films.

4. Verfahren zum Herstellen eines Ionensensors nach Anspruch 3, wobei
die Anordnungsfläche des Elektrodenkörpers (5) mit einem Material versehen ist, das sich von dem des Hauptkörpers des Elektrodenkörpers (5) unterscheidet.

## Revendications

1. Procédé de fabrication d'un capteur d'ions (1) dans lequel un film sensible aux ions (10) est lié à un élément d'électrode recevant une solution interne et incluant une électrode interne, le procédé de fabrication d'un capteur d'ions (1) étant **caractérisé en ce qu'**il comprend :
une étape d'application consistant à appliquer de l'eau sur une surface de placement d'un corps d'électrode (5), dans l'élément d'électrode, sur lequel le film sensible aux ions (10) doit être placé ;
une étape de placement consistant à placer le film sensible aux ions (10) dans un état dans lequel de l'eau est présente sur la surface de placement ; une étape de pressurisation consistant à pressuriser le film sensible aux ions (10) depuis un côté opposé au corps d'électrode (5) ; et
une étape d'irradiation consistant à irradier le film sensible aux ions (10) avec un faisceau laser depuis le côté opposé au corps d'électrode (5) dans un état dans lequel le film sensible aux ions (10) est pressé contre le corps d'électrode (5), dans lequel
un poids qui transmet le faisceau laser est utilisé dans l'étape de pressurisation.

2. Procédé de fabrication d'un capteur d'ions selon la revendication 1, dans lequel
l'étape d'irradiation est effectuée tandis que l'étape de pressurisation est poursuivie.

3. Procédé de fabrication d'un capteur d'ions selon la revendication 1, dans lequel
un point de fusion de la surface de placement du corps d'électrode est inférieur à celui du film sensible aux ions (10).

4. Procédé de fabrication d'un capteur d'ions selon la revendication 3, dans lequel
la surface de placement du corps d'électrode (5) est pourvue d'un matériau différent de celui d'un corps principal du corps d'électrode (5).
